# EUROPEAN PATENT SPECIFICATION

(11) **EP 2 639 145 B1**
(45) Date of publication and mention of the grant of the patent: **04.06.2014**
(21) Application number: 12190558.2
(22) Date of filing: 30.10.2012
(51) Int. Cl.: B62J 1/12, B62J 9/00, B62J 37/00, F02M 37/00

(54) **Straddle-type vehicle**
Grätschsitz-Fahrzeug
Véhicule de type à enfourcher

(30) Priority: 15.03.2012 JP 2012059426
(43) Date of publication of application: 18.09.2013
(73) Proprietor: Yamaha Hatsudoki Kabushiki Kaisha, Iwata-shi, Shizuoka 438-8501 (JP)
(72) Inventor: Wakano, Taisuke, Iwata-shi, Shizuoka 438-8501 (JP)
(74) Representative: Grünecker, Kinkeldey, Stockmair & Schwanhäusser

(56) References cited:
- EP-A2- 2 305 544
- JP-A- 2009 067 064
- US-A1- 2010 078 241

## Description

The present invention relates to a straddle-type vehicle according to the preamble of independent claim 1. Such a straddle type vehicle can be taken from the prior art document JP 2009-67064 A.

A straddle-type vehicle such as a motorcycle includes a fuel hose which connects a fuel discharge portion of a fuel tank and a fuel supply unit of an engine (such as an injector). In JP 2009-67064 A, there is disclosed a motorcycle which includes a fuel tank supported by a rear part of a vehicle body frame, and a fuel hose whose intermediate part is held by a clamp provided on the vehicle body frame. The fuel hose disclosed in JP 2009-67064 A is formed from a material having relatively high rigidity such as plastic.

According to JP 2009-67064 A, the fuel hose is formed from a material having relatively high rigidity such as plastic as described above. This structure can prevent movement of the fuel hose between the clamp and the fuel discharge portion of the fuel tank. However, a fuel hose made of a material having low rigidity such as a rubber hose is desired to be used in some cases for the purpose of cost reduction or for other reasons. When this type of fuel hose is employed for a structure which has a long distance between the fuel discharge unit of the fuel tank and the vehicle body frame, the position of the fuel hose easily changes between these components.

An object according to an aspect of the invention is to provide a straddle-type vehicle capable of preventing position change of a fuel hose even when the distance between a fuel discharge portion provided on the upper surface of a fuel tank and a vehicle body frame is long. According to the present invention said object is solved by a straddle-type vehicle having the features of independent claim 1. Preferred embodiments are laid down in the dependent claims.

A straddle-type vehicle according to an example includes: a seat; a storing box disposed below the seat; a fuel tank disposed below the seat and positioned on the rear side of the storing box; left and right rear frames forming a rear part of a vehicle body frame and supporting the storing box and the fuel tank, the rear frames being positioned lower than the upper edge of the storing box and the upper surface of the fuel tank, the rear frames; a fuel hose connecting a fuel discharge portion provided on the upper surface of the fuel tank and a fuel supply unit supplying fuel to an engine, the fuel hose including a portion extending from the fuel discharge portion toward one of the left and right rear frames; a clamp provided to the storing box to clamp the portion of the fuel hose, the clamp being spaced upward from the one rear frame toward which the portion of the fuel hose extends, the clamp being located lower than the upper surface of the fuel tank and located laterally from the fuel tank.

According to the straddle-type vehicle having this structure, position change of the fuel hose is prevented even when the distance between the fuel discharge portion provided on the upper surface of the fuel tank and the rear frame is long. Moreover, the layout that the clamp positioned laterally from the fuel tank does not decrease the volume of the storing box resulting from the presence of the clamp. Similarly, the layout that the clamp positioned laterally from the fuel tank does not requires considerable change of the external shape and the position of the fuel tank resulting from the presence of the clamp.

According to the present teaching, the straddle-type vehicle includes a motorcycle and a motor tricycle. The motorcycle includes a type which positions an engine below a front frame extending downward toward the rear from a head pipe supporting a steering shaft (under-bone type), and a type which positions an engine below a rear frame extending upward toward the rear from a rear part of a front frame, and includes a board disposed on the front frame as a portion on which a rider's feet are placed (scooter type).

According to an example, the clamp may be provided on a flange disposed at the upper edge of the storing box. In this example, the clamp can be easily disposed close to the fuel discharge portion of the fuel tank. This arrangement can further effectively prevent movement of the fuel hose in the vicinity of the fuel discharge portion.

According to an example, the fuel tank may include a first corner wall and a second corner wall located on the opposed sides with respect to the center in the vehicle width direction. In this case, the fuel hose may extend through a position on the front and lateral side of the first corner wall. A first point defined as a cross point of a line extending along the vehicle width direction and the first corner wall may have a smaller distance from the center of the fuel tank in the vehicle width direction than a second point defined as a cross point of the line extending along the vehicle width direction and the second corner wall. The clamp may be disposed laterally from the first corner wall. This structure can reduce extension of the clamp of the storing box toward the outside in the vehicle width direction. Moreover, according to the layout that the clamp is located laterally from the first corner wall, the fuel tank can have a sufficient width in its portion further rearward than the the corner walls, and therefore can easily produce a sufficient volume of the fuel tank.

According to an example, the storing box may include, at the upper edge thereof, a flange supporting the seat, and the clamp may be disposed on the flange. This structure can simplify the constitution of the storing box.

According to an example, the upper edge of the storing box may include a rear flange extending rearward. The clamp may include a recess formed at the edge of the rear flange and an annular member accepted to the recess. The fuel hose may be inserted inside the annular member. This structure can facilitate clamping of the fuel hose to the storing box.

According to an example, the clamp provided on the storing box may be defined as a first clamp. The one rear frame may include a second clamp which clamps the fuel hose. The second clamp may be disposed on a surface toward the outside in the vehicle width direction. In this example, the fuel hose is disposed on the outside surface of the rear frame. Thus, a sufficient volume of the storing box disposed between the left and right rear frames can be easily produced.

According to an example, the clamp may have a shorter distance from the horizontal plane where the fuel discharge portion is located than a distance in the up-down direction between the clamp and the the one rear frame. This structure can prevent position change of the fuel hose in the vicinity of the fuel discharge portion.

According to an example, the storing box may include an upper portion positioned higher than the left and right rear frames, and a lower portion positioned lower than and between the left and right rear frames. This structure increases the volume of the storing box.

According to an example, the clamp may overlap with the one rear frame as viewed in the plan view. This layout of the clamp can avoid extension of the fuel hose toward the outside in the vehicle width direction, thereby preventing interference between the fuel hose and the seat disposed above the storing box and the fuel tank. Moreover, according to this layout, the width of the storing box in the vehicle width direction and the width of the fuel tank in the vehicle width direction can become closer to the distance between the left and right rear frames. Thus, sufficient volumes of the storing box and the fuel tank can be easily secured.

### BRIEF DESCRIPTION OF THE DRAWINGS

FIG. 1 is a side view of a motorcycle according to an embodiment.
FIG. 2 is a side view illustrating a supporting structure of a fuel hose included in the motorcycle.
FIG. 3 is a perspective view illustrating the supporting structure of the fuel hose.
FIG. 4 is a plan view illustrating the supporting structure of the fuel hose.
FIG. 5 is a plan view of a fuel tank and a storing box, illustrating the supporting structure of the fuel hose. This figure shows a state where a cover shown in FIG. 4 is removed from the fuel tank.
FIG. 6 is a side view of the fuel tank and the storing box, illustrating the supporting structure of the fuel hose. This figure shows a state where the cover of the fuel tank shown in FIG. 4 is removed.
FIG. 7 is a side view of the fuel tank and the storing box, illustrating the supporting structure of the fuel hose.
FIG. 8 is a perspective view illustrating a main part of the storing box.
FIG. 9 is a plan view illustrating the main part of the storing box. This figure shows a state where an annular member is removed from the clamp of the storing box.
FIG. 10 is a perspective view of a vehicle body cover of the motorcycle. This figure does not show a front lower side cover shown in FIG. 1.
FIG. 11 is a perspective view illustrating the supporting structure of the fuel hose in the front area of the motorcycle.
FIG. 12 illustrates an enlarged main part shown in FIG. 11.

### DETAILED DESCRIPTION OF A PREFERRED EMBODIMENT

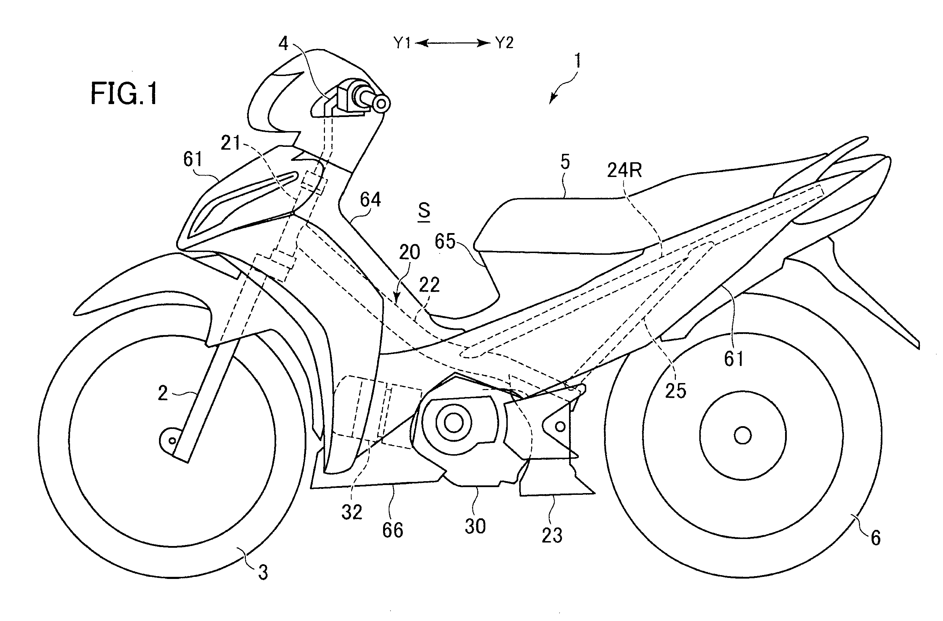

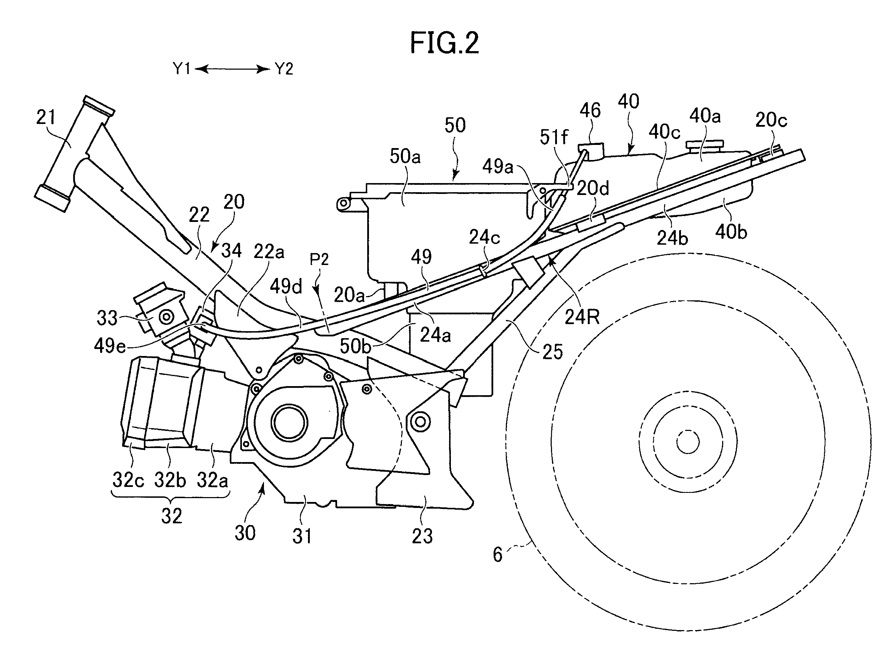

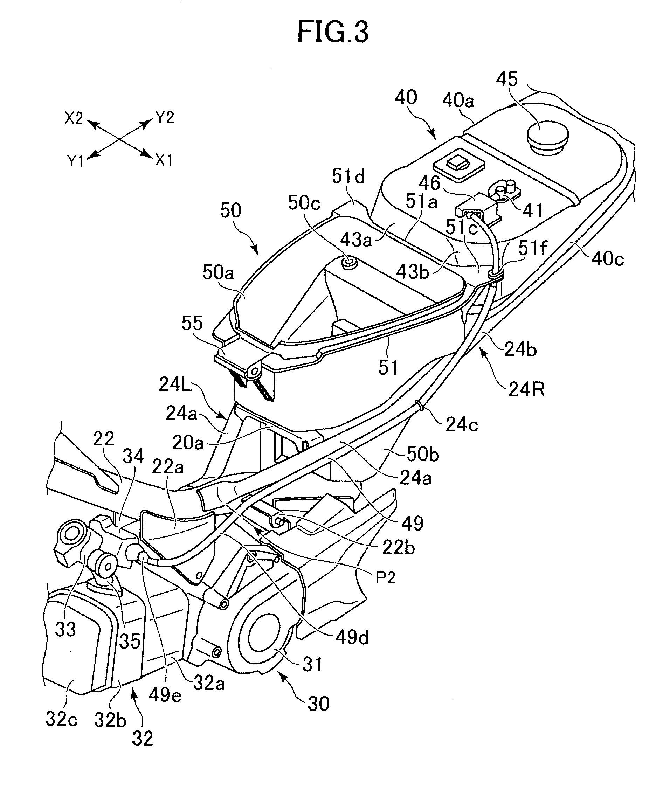

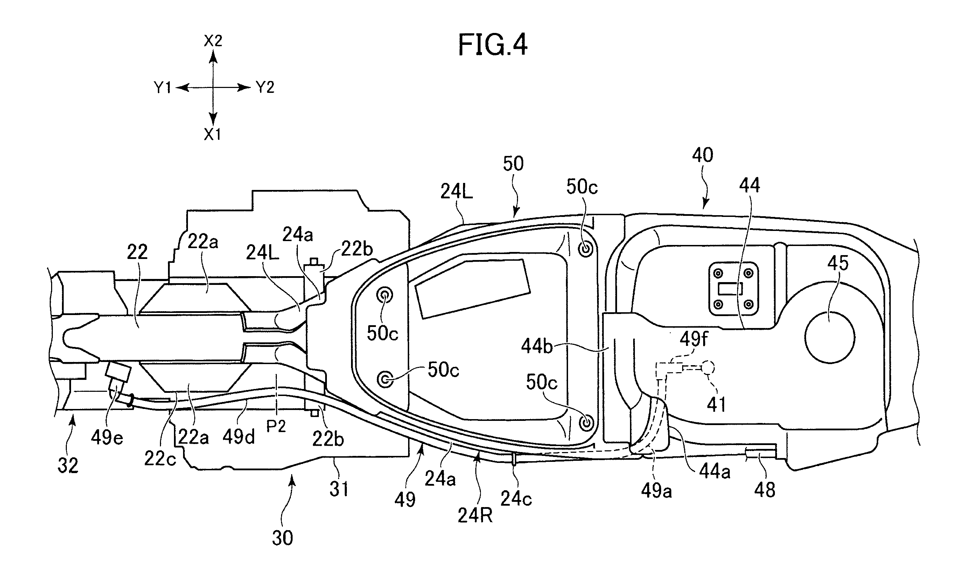

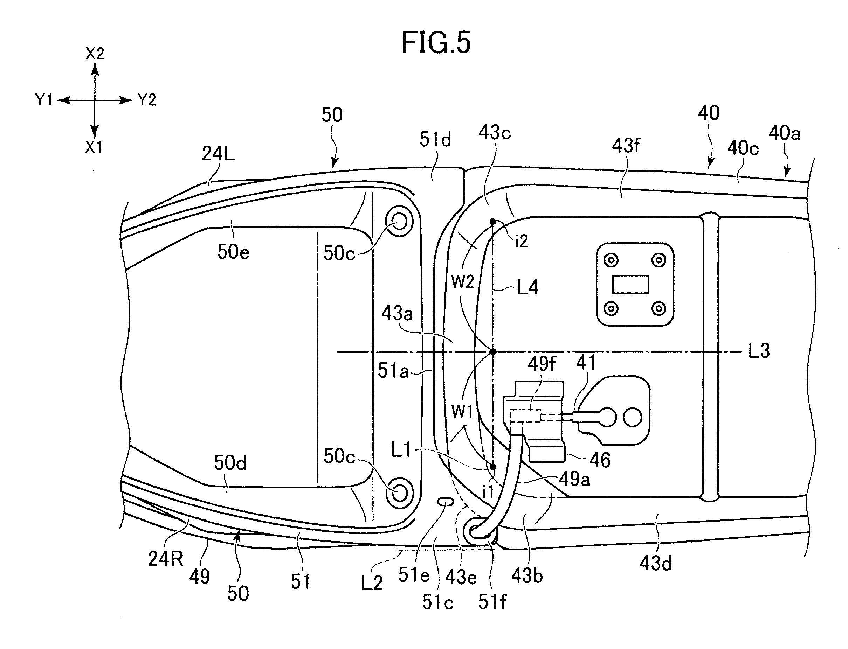

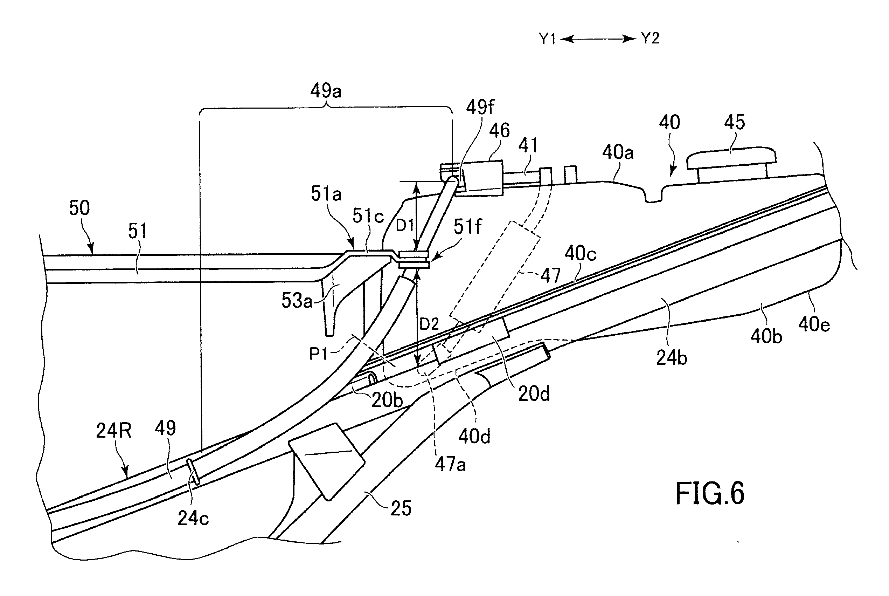

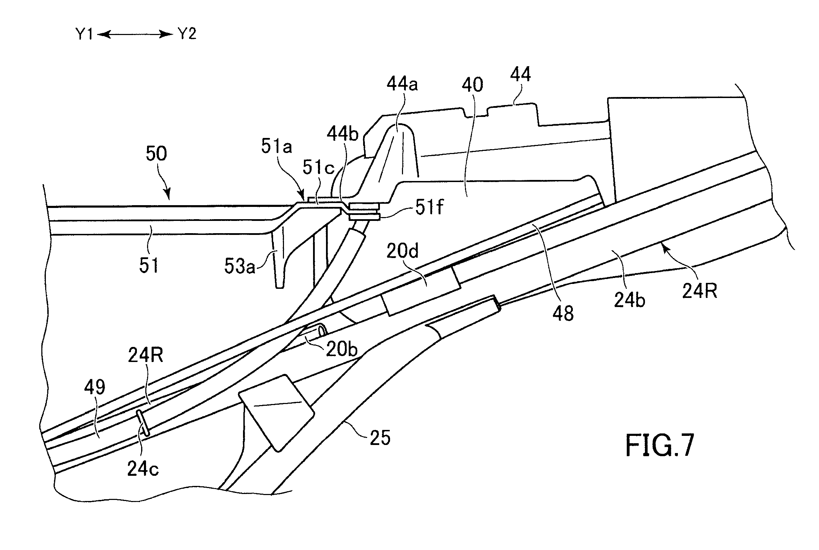

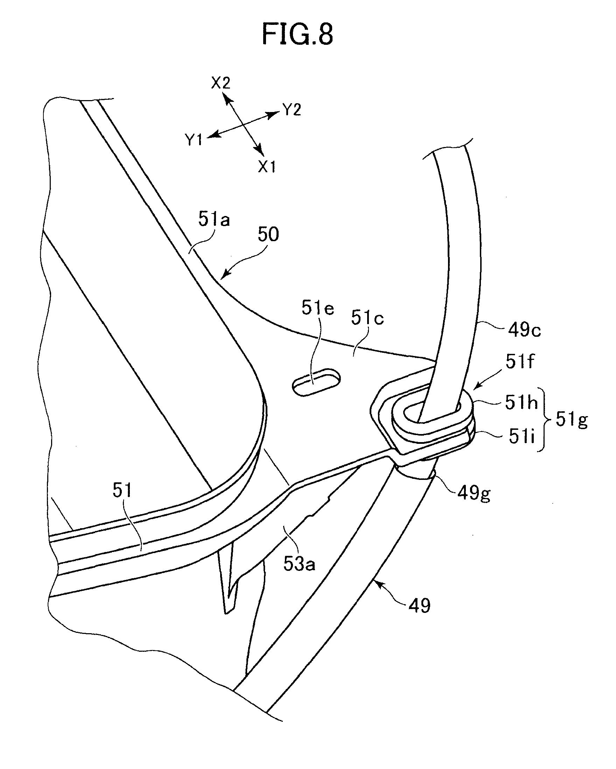

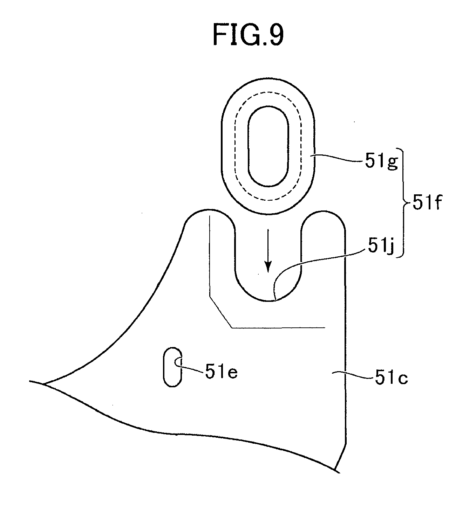

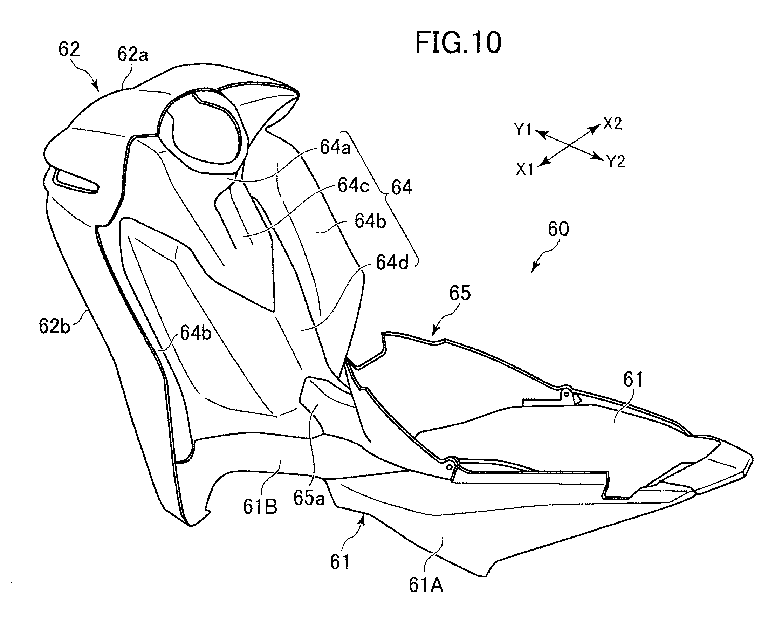

Hereinafter, an embodiment will be described with reference to the drawings. FIG. 1 is a side view of a motorcycle 1 according to this embodiment. FIG. 2 is a side view illustrating a supporting structure of a fuel hose 49 included in the motorcycle 1. FIG. 3 is a perspective view illustrating the supporting structure of the fuel hose 49. FIG. 4 is a plan view illustrating the supporting structure of the fuel hose 49. FIG. 5 is a plan view of a fuel tank 40 and a storing box 50, illustrating the supporting structure of the fuel hose 49. FIGS. 6 and 7 are side views of the fuel tank 40 and the storing box 50, illustrating the supporting structure of the fuel hose 49. FIGS. 5 and 6 illustrate a state where a cover 44 shown in FIG. 4 is removed from the fuel tank 40. FIG. 8 is a perspective view illustrating the main part of the storing box 50. FIG. 9 is a plan view illustrating the main part of the storing box 50. FIG. 9 shows a state where an annular member 51g is removed from a clamp 51f of the storing box 50. FIG. 10 is a perspective view illustrating a vehicle body cover 60 of the motorcycle 1. In the respective figures, a direction Y1 corresponds to the front direction of the vehicle body, and a direction Y2 corresponds to the rear direction of the vehicle body. A direction X1-X2 indicates the vehicle width direction, wherein the X1 direction and the X2 direction correspond to the left direction and the right direction (according to a view in forward direction Y1), respectively. In the following description, an outward direction in the vehicle width direction corresponds to a direction away from the center in the vehicle width direction, while an inward direction in the vehicle width direction corresponds to a direction toward the center in the vehicle width direction.

As illustrated in FIG. 1, a head pipe 21 is provided at the front end of a vehicle body frame 20. A steering shaft is inserted into the head pipe 21. The steering shaft is rotatably supported. The lower end of the steering shaft is connected with a front fork 2. A front wheel 3 is supported at the lower end of the front fork 2. The upper end of the steering shaft is connected with a steering 4.

As illustrated in FIG. 2, the vehicle body frame 20 includes one front frame 22. The front frame 22 extends diagonally downward and rearward from the head pipe 21, and constitutes the front portion of the vehicle body frame 20. The front frame 22 in this example is disposed at the center in the vehicle width direction. The position of the front frame 22 is not limited to this position but may be disposed in such a condition that a part of the front frame 22 (such as the rear part) is slightly bended for avoiding interference with other components.

A seat 5 is located rearward from the steering 4. A tandem seat is employed as the seat 5. The rear part of the seat 5 on which a passenger behind a rider (driver) sits is positioned higher than the front part of the seat 5 on which the rider sits. As will be described later, the fuel tank 40 is provided below the rear part of the seat 5. The fuel hose 49 connected with the fuel tank 40 is attached to the clamp 51f of the storing box 50 in the vicinity of the fuel tank 40. This structure effectively avoids interference between the fuel hose 49 and the lower surface of the seat 5. The motorcycle 1 in this example is of a so-called under-bone type which produces a space S above the front frame 22 between the steering 4 and the seat 5 (see FIG. 1).

As illustrated in FIG. 2, an engine 30 is disposed below the front frame 22. The vehicle body frame 20 includes a rear bracket 23 extending downward from the rear end of the front frame 22. The rear bracket 23 is positioned behind the engine 30. The engine 30 is supported by the front frame 22 and the rear bracket 23. More specifically, the rear part of the engine 30 (more specifically, the rear part of a crank case 31) is fixed to the rear bracket 23. The front frame 22 includes an engine bracket 22a which extends downward from the middle part of the front frame 22. The front portion of the crank case 31 is fixed to the engine bracket 22a. A rear wheel 6 is located rearward from the engine 30 and the rear bracket 23. The wheel shaft of the rear wheel 6 is supported by a swing arm (not shown) extended from the rear bracket 23 toward the rear.

As illustrated in FIG. 2, the engine 30 includes the crank case 31 in the rear part thereof. The engine 30 further includes a cylinder block 32a, a cylinder head 32b, and a head cover 32c (hereinafter, these three elements are referred to as an engine front part 32) in the front part of the engine 30. The structure of the engine front part 32 is not limited to this structure but may be constructed otherwise, such as a structure which has the head cover 32c and the cylinder head 32b combined into one body. The engine front part 32 projects from the crank case 31 toward the front. The engine 30 further includes a throttle body 33 containing a valve which controls the air amount to be supplied to the engine 30, and a fuel supply unit 34 which supplies fuel to the engine 30. The fuel supply unit 34 is joined to an air intake pipe 35 connecting the throttle body 33 and the cylinder head 32b. The fuel supply unit 34 in this example employs an injector which injects fuel into the air intake pipe 35. The fuel supply unit 34 may be attached to either the engine front part 32 (more specifically, the cylinder head 32b), or the throttle body 33.

As illustrated in FIG. 2, the fuel supply unit 34 in this example is located downward from the front frame 22. More specifically, the fuel supply unit 34 is located immediately below the front frame 22 in such a position as to become invisible behind the front frame 22 in the plan view. The throttle body 33 is also located downward from the front frame 22. The fuel supply unit 34 is disposed at the back of the throttle body 33. The engine front part 32 is spaced downward apart from the front frame 22, with the fuel supply unit 34 and the throttle body 33 positioned between the engine front part 32 and the front frame 22. The position of the fuel supply unit 34 is not limited to this position but may be disposed otherwise, such as a position offset toward the outside in the vehicle width direction with respect to the front frame 22 in the plan view. Alternatively, the fuel supply unit 34 may be obliquely fixed to the engine 30 to overlap with the front frame 22 in the side view. The fuel supply unit 34 may be fixed to the right part or the left part of the engine front part 32 either directly or indirectly (i.e., via the air intake pipe 35).

As will be described in detail later, the front end of the fuel hose 49 (more specifically, a connector 49e) is connected with the fuel supply unit 34. As illustrated in FIG. 2, the fuel supply unit 34 projects upward from the engine front part 32 (more specifically, the cylinder head 32b), and the fuel hose 49 connects with the outer circumferential surface of the fuel supply unit 34. The outer circumferential surface in this context refers to a surface which surrounds the center line of the fuel supply unit 34 (such as the center line of the injector) extending along the direction of connection between the fuel supply unit 34 and the engine 30. In this example, the fuel hose 49 connects with the side surface of the fuel supply unit 34. The side surface of the fuel supply unit 34 is disposed on the same side as the location of the fuel hose 49 with respect to the center in the vehicle width direction. According to this example, the fuel hose 49 is located on the left side with respect to the center in the vehicle width direction (and according to a view in forward direction Y1), and the fuel hose 49 is connected with the left side surface of the fuel supply unit 34. This structure facilitates the layout of the fuel hose 49. The fuel supply unit 34 has a smaller length in the vehicle width direction than the corresponding length of the throttle body 33. This arrangement of the small fuel supply unit 34 at a position behind the throttle body 33 facilitates connection between the fuel hose 49 and the fuel supply unit 34.

The vehicle body frame 20 includes a pair of (left and right) rear frames 24R and 24L (see FIG. 3). Both the front ends of the rear frames 24R and 24L connect with the rear part of the front frame 22. As illustrated in FIG. 2, the connection position between the front frame 22 and the rear frames 24R and 24L is located upward from the crank case 31. The rear frames 24R and 24L extend diagonally upward and rearward from the front ends thereof to constitute the rear part of the vehicle body frame 20. The rear frames 24R and 24L in this example linearly extend in the side view of the vehicle body frame 20.

As illustrated in FIG. 3, an inclined portion 24a is provided at each front part of the rear frames 24R and 24L. Similarly, a rear extending portion 24b is provided at each rear part of the rear frames 24R and 24L. Each of the inclined portions 24a extends diagonally upward toward the rear from the front end thereof connected to the front frame 22, and extends toward the outside in the vehicle width direction. The distance between the left and right inclined portions 24a gradually increases toward the rear. Thus, the rear frames 24R and 24L are positioned away from each other in the vehicle width direction. The rear extending portions 24b are bent with respect to the inclined portions 24a and then extend toward the rear. The rear extending portions 24b extend in the front-rear direction of the vehicle body in the plan view. As illustrated in FIG. 2, the vehicle body frame 20 further includes stays 25 which extend from the rear end of the front frame 22 to the middle portions of the rear frames 24R and 24L, and support the rear extending portions 24b.

The motorcycle 1 includes the storing box 50 and the fuel tank 40 disposed below the seat 5 (see FIGS. 1 and 2). The storing box 50 is opened upward and accommodates various articles used by the rider or the passenger, and electric components such as a battery. The fuel tank 40 is located on the rear side of the storing box 50. The fuel tank 40 is positioned adjacent to the storing box 50 with no component interposed between the fuel tank 40 and the storing box 50.

As illustrated in FIG. 2, the rear frames 24R and 24L are located lower than the upper edge of the storing box 50 and the upper surface of the fuel tank 40 to support these components 50 and 40. According to this example, the storing box 50 and the fuel tank 40 are located between the left and right rear frames 24R and 24L. The vehicle body frame 20 includes a cross bar 20a extending between the front parts of the rear frames 24R and 24L (inclined portions 24a in this example) (see FIG. 3). The front part of the storing box 50 is supported by the cross bar 20a. The vehicle body frame 20 further includes a cross bar 20b extending between the rear frames 24R and 24L (see FIG. 6). The rear part of the storing box 50 is supported by the cross bar 20b. FIG. 4 shows four attachment portions 50c for fixing the storing box 50 to the cross bars 20a and 20b.

As illustrated in FIG. 2, the rear frames 24R and 24L extend along the side surfaces of the middle portions of the storing box 50 in the up-down direction. In other words, the storing box 50 is so disposed as to have an upper part 50a located higher than the rear frames 24R and 24L, and a lower part 50b located lower than the rear frames 24R and 24L. This structure increases the volume of the storing box 50. The widths of the lower part 50b in the front-rear direction and in the vehicle width direction are smaller than those of the upper part 50a. The lower part 50b accommodates electric components such as a battery, for example. The foremost portion of the upper part 50a is supported by the cross bar 20a, while the rearmost portion of the upper part 50a is supported by the cross bar 20b.

The width of the upper part 50a in the vehicle width direction is longer than the distance between the left and right rear frames 24R and 24L. Thus, a leftmost portion 50d and a rightmost portion 50e of the upper part 50a are positioned over the rear frame portions 24R and 24L (see FIG. 5). That is, the leftmost portion 50d and the rightmost portion 50e overlap with the rear frames 24R and 24L in the plan view. The layout where the rear frames 24R and 24L is located downward from the upper edge of the storing box 50 can increase the height of the upper part 50a of the storing box 50 in the up-down direction, and thereby raises the volume of the upper part 50a. Even when the positions of the rear frames 24R and 24L are lowered in order to increase the volume of the upper part 50a of the storing box 50, the position change of the fuel hose 49 between a fuel discharge portion 41 (described later) of the fuel tank 40 and the rear frames 24R and 24L is prevented by the function of the clamp 51f provided on the storing box 50 as will be described later.

As noted above, the fuel tank 40 is disposed on the rear side of the storing box 50. The fuel tank 40 is supported by the rear extending portions 24b of the rear frames 24R and 24L. According to this example, a cross bar 20c extends between the rearmost parts of the two rear extending portions 24b as illustrated in FIG. 2. The fuel tank 40 includes a flange 40c surrounding the fuel tank 40 in the plan view. The rear part of the flange 40c is fixed to the cross bar 20c. The right and left parts of the flange 40c are fixed to brackets 20d provided on both of the two rear extending portions 24b. The fuel tank 40 includes a bowl-shaped upper tank portion 40a opening downward, and a bowl-shaped lower tank portion 40b opening upward. The outer circumferential edge of the upper tank portion 40a and the outer circumferential edge of the lower tank portion 40b are joined to each other to constitute the flange 40c.

The upper surface of the fuel tank 40 is positioned higher than the upper edge of the storing box 50 (see FIG. 2). As illustrated in FIG. 3, the fuel tank 40 includes the fuel discharge portion 41 on the upper surface of the fuel tank 40. The fuel tank 40 contains a fuel pump 47 in the inside thereof (see FIG. 6) so that fuel sucked by the fuel pump 47 can be discharged through the fuel discharge portion 41. The position of the fuel pump is not limited to this position. For example, the function of the fuel pump may be performed by the fuel supply unit 34, in which case fuel within the fuel tank 40 is supplied to the fuel supply unit 34 by the function of the fuel supply unit 34. The fuel hose 49 connects the fuel discharge portion 41 and the fuel supply unit 34 of the engine 30. As illustrated in FIG. 2, the fuel supply unit 34 is located further forward and lower than the fuel discharge portion 41. More specifically, the fuel supply unit 34 is located further forward than the rearmost part (rear flange 51 a described later) of the upper edge of the storing box 50 and lower than a clamp 24c of the rear frame 24R. According to this example, the fuel supply unit 34 is positioned below the front frame 22 as discussed above. Thus, the fuel hose 49 extends downward toward the front in the side view. As illustrated in FIG. 4, a connector 49f is provided at the rear end of the fuel hose 49 as a junction between the fuel hose 49 and the fuel discharge portion 41. Similarly, the connector 49e is provided at the front end of the fuel hose 49 as a junction between the fuel hose 49 and the fuel supply unit 34. The fuel hose 49 is made of flexible material such as rubber.

As illustrated in FIG. 6, the rear frames 24R and 24L (more specifically, the rear extending portions 24b) are disposed lower than the upper surface of the fuel tank 40. The fuel hose 49 includes a portion extending from the fuel discharge portion 41 toward one of the two rear frames 24R and 24L (left rear frame 24R in this example). This portion is hereinafter referred to as a hose rear portion 49a. The hose rear portion 49a bends downward from the fuel discharge portion 41 while extending toward the outside in the vehicle width direction to reach the (left) rear frame 24R (see FIG. 5). As can be seen from FIG. 5, the connector 49f of the fuel hose 49 has an L shape so that the fuel hose 49 connected with the fuel discharge portion 41 via the connector 49f can extend to the left (direction X1) in the plan view. A protection plate 46 covering the connector 49f is fixed to the upper surface of the fuel tank 40.

As illustrated in FIG. 6, the upper edge of the storing box 50 is spaced upward apart from the rear frame 24R. As noted above, the upper surface of the fuel tank 40 on which the fuel discharge portion 41 is provided is located higher than the upper edge of the storing box 50. The storing box 50 includes the clamp 51f. According to this example, the clamp 51f is provided to the upper edge of the storing box 50. The clamp 51f is positioned lower than the upper surface of the fuel tank 40, spaced upward apart from the rear frame 24R and clamps the hose rear portion 49a. That is, the clamp 51f restricts position change of the hose rear portion 49a. As illustrated in FIG. 9, the clamp 51f in this example has a recess 51j formed at the upper edge of the storing box 50, and an annular member 51g accepted in the recess 51j and fixed thereto. The hose rear portion 49a is inserted through the inside of the annular member 51g. This structure prevents separation of the hose rear portion 49a from the upper edge of the storing box 50. According to this structure, the portion (that is the rear portion 49a) of the fuel hose 49 which is spaced upward from from the rear frame 24R is clamped, and thereby shift of the fuel hose 49 in the vicinity of the fuel discharge portion 41 is avoided even when the fuel hose 49 is made of material having relatively low rigidity such as rubber. Moreover, in a structure which does not include the clamp 51f and therefore allows easy position change of the fuel hose 49, a relatively large space is required around the hose rear portion 49a so as to avoid interference between the fuel hose 49 and the components around the fuel hose 49. However, the clamp 51f provided on the storing box 50 in this embodiment can eliminate the necessity for preparing such a large space. Moreover, the distance between the fuel discharge portion 41 and the clamp 51f disposed at the upper edge of the storing box 50 is short in the up-down direction in this embodiment. This arrangement further securely prevents interference between the fuel hose 49 and the components positioned close the fuel hose 49 (such as the lower surface of the seat 5 and side cover 61 of the vehicle body cover 60 described later).

As illustrated in FIG. 6, the clamp 51f is located laterally (to the left in this example) from the fuel tank 40. Thus, the clamp 51f overlaps with the fuel tank 40 in the side view. This arrangement decreases the distance between the fuel discharge portion 41 and the clamp 51f in the front-rear direction, thereby preventing a sharp bend of the fuel hose 49 (hose rear portion 49a). Moreover, this arrangement that the clamp 51f is located laterally from the fuel tank 40 can avoid decrease in the volume of the storing box 50, and decrease in the volume of the fuel tank 40. Furthermore, this arrangement of the clamp 51f eliminates the necessity for considerable change in the external shape and position of the fuel tank 40. As illustrated in FIG. 5, a flange 51 is provided at the upper edge of the storing box 50. The flange 51 includes the rear flange 51 a spreading toward the rear. The rear flange 51 a includes projections 51c and 51d disposed at the leftmost part and the rightmost part of the rear flange 51 a, respectively, and extending toward the rear longer than the portion of the rear flange 51a formed between the projections 51c and 51d. The clamp 51f is provided on one of the projections 51c and 51d (left projection 51c in this example). The arrangement that the clamp 51f on the projection 51c is located at the leftmost part of the rear flange 51a further effectively prevents decrease in the volume of the fuel tank 40. According to this example, the clamp 51f is provided at the rear end of the projection 51c. This arrangement further decreases the distance between the fuel discharge portion 41 and the clamp 51f in the front-rear direction.

As illustrated in FIG. 5, the upper tank portion 40a of the fuel tank 40 includes a front wall 43a which forms the wall on the front side of the upper tank portion 40a. The upper tank portion 40a further includes a first corner wall 43b and a second corner wall 43c which form corner walls of the front side and are located on the opposite sides with respect to the center in the vehicle width direction. According to this example, the first corner wall 43b is positioned on the left side from the center in the vehicle width direction, whereas the second corner wall 43c is positioned on the right side from the center in the vehicle width direction. The front wall 43a is located between the first corner wall 43b and the second corner wall 43c and constitutes the foremost part of the upper tank portion 40a. The first corner wall 43b forms a wall between the front wall 43a and a first side wall 43d (left side wall in this example) located on the same side as the first corner wall 43b from the center in the vehicle width direction. The second corner wall 43c forms a wall between the front wall 43a and a second side wall 43f (right side wall in this example) located on the side opposite to the first side wall 43d. The rear edge of the rear flange 51 a of the storing box 50 is curved along the front wall 43a, the first corner wall 43b and the second corner wall 43c so that a sufficient volume of the fuel tank 40 can be secured.

As illustrated in FIG. 5, the hose rear portion 49a extends through a location positioned forward and laterally from the first corner wall 43b. In this example, the hose rear portion 49a extends along the first corner wall 43b. Alternately, the hose rear portion 49a may not be required to extend along the first corner wall 43b. For example, when only a part of the hose rear portion 49a is located forward and laterally from the first corner wall 43b, the extension direction of this part may not extend along the first corner wall 43b. For example, the part of the hose rear portion 49a may extend with larger inclination than that of the first corner wall 43b, or may extend in the front-rear direction through the location positioned forward and laterally from the first corner 43b.

The shapes of the first corner wall 43b and the second corner wall 43c are not symmetric with respect to the center in the vehicle width direction, but are disposed such that the first corner wall 43b is largely shifted inwardly in the vehicle width direction in comparison with the second corner wall 43c. In other words, the first corner wall 43b is located further inwardly than an imaginary wall which is symmetry with the second corner wall 43c with respect to a line L3 passing through the center of the fuel tank 40 in the vehicle width direction. A long and two short dashes line L1 in FIG. 5 indicates the upper edge of this imaginary wall portion. Specifically, the first corner wall 43b is offset toward the rear and the center in the vehicle width direction from the imaginary wall portion which is symmetry with the second corner wall 43c with respect to the line L3. In other words, a cross point i1 defined by a line L4 extending in the vehicle width direction and the first corner wall 43b has a smaller distance from the center line L3 of the fuel tank 40 than a cross point i2 defined by the line L4 and the second corner wall 43c. In FIG. 5, a distance W1 indicates the distance between the cross point i1 and the center line L3, while a distance W2 indicates the distance between the cross point i2 and the center line L3. The distance W1 is smaller than the distance W2. As noted above, the hose rear portion 49a extends through the location positioned forward and laterally from the first corner wall 43b. The clamp 51f of the storing box 50 is located laterally from the first corner wall 43b. According to this arrangement of the first corner wall 43b, the hose rear portion 49a, and the clamp 51f, expansion of the clamp 51f and the projection 51c toward the outside in the vehicle width direction can be decreased, wherefore increase of the vehicle width can be prevented. Accordingly, the rider and the passenger sitting behind the rider can easily straddle (sit) on the seat 5. Moreover, according to the position of the clamp 51f, the fuel tank 40 can have a sufficient width in its portion located further rearward than the the first corner wall 43b, thereby easily producing a sufficient volume of the fuel tank 40.

As illustrated in FIG. 5, the clamp 51f and the projection 51c are not positioned beyond the position of the left and right edges of the fuel tank 40 toward the outside in the vehicle width direction. In other words, the clamp 51f and the projection 51c are not positioned beyond a line L2 passing through the left edge of the fuel tank 40 toward the outside in the vehicle width direction. The vehicle body cover 60 of the motorcycle 1 includes the side cover 61. The side cover 61 is positioned along the rear frame 24R, and covers the outer surface (left side in this example) of the rear frame 24R in the vehicle width direction (see FIG. 9). The layout that the clamp 51f and the projection 51c are not positioned beyond the line L2 prevents their interferes with the side cover 61. The positions of the edge of the projection 51c (left edge in this example) and the clamp 51f are not limited to the positions specified in this example but may be located beyond the line L2 toward the outside in the vehicle width direction. In this case, a sufficient volume of the fuel tank 40 can be easily secured. Alternatively, the edge of the projection 51c and the clamp 51f may be located further inwardly than the line L2 in the vehicle width direction.

As noted above, the upper tank portion 40a of the fuel tank 40 has a bowl shape which opens to below. The circumferential walls of the upper tank portion 40a (walls 43a, 43b, 43d, 43c, and other not-shown rear walls) are inclined such that the upper edges of these walls is located inwardly than the lower edges thereof. As noted above, the clamp 51f of the storing box 50 is located laterally from the upper tank portion 40a (more specifically, from the first corner wall 43b). According to this layout of the clamp 51f, the clamp 51f can be located in the space produced by the inclination of the first corner wall 43b, i.e., the space formed on the front and lateral side of the first corner wall 43b. Thus, the clamp 51f can be equipped without greatly decreasing the volume of the fuel tank 40.

The first corner wall 43b is inclined more greatly than the second corner wall 43c. In this embodiment, the upper edge of the first corner wall 43b is located more inwardly than the upper edge of the imaginary wall portion forming symmetry with the second corner wall 43c with respect to the center in the vehicle width direction (chain double-dashed line L1 in FIG. 5) as illustrated in FIG. 5. A lower edge 43e of the first corner wall 43b is located below the projection 51c. According to this structure, a sufficient volume of the fuel tank 40 can be more securely produced than a structure which recesses the first corner wall 43b more greatly than the second corner wall 43c without inclination of the first corner wall 43b.

As illustrated in FIGS. 5 and 6, the clamp 51f and the projection 51c of the storing box 50 are located upward from the rear frame 24R. In other word, the clamp 51f overlaps with the rear extending portion 24b in the plan view. According to this structure, the projection 51c and the clamp 51f does not affect the volume of the fuel tank 40, nor increase the width of the vehicle. Further, the side cover 61 covering the left side of the rear frame 24R can be easily attached to the vehicle body frame 20 (more specifically, to the rear frame 24R and the stay 25). As noted above, the clamp 51f and the projection 51c of the storing box 50 may be positioned further outwardly (that is, further leftward) than the rear frame 24R in the vehicle width direction. In this case, a sufficient volume of the fuel tank 40 can be further easily produced.

As illustrated in FIG. 3, the rear frame 24R includes the clamp 24c. The clamp 24c is located at the foremost part of the rear extending portion 24b. The fuel hose 49 is attached to the rear fame 24R via the clamp 24c. Thus, the clamp 24c restricts position change of the fuel hose 49. The clamp 24c is an annular member having an opened part, through the inside of which the fuel hose 49 is inserted. This structure restricts movement of the middle part of the fuel hose 49. As noted above, the fuel supply unit 34 of the engine 30 is located downward from the front frame 22, and the fuel hose 49 connects the fuel supply unit 34 and the fuel discharge portion 41 of the fuel tank 40. Thus, the fuel hose 49 passes through the clamp 51f in the downward direction, and extends toward the front. The fuel supply unit 34 is located further forward than the clamp 24c of the rear frame 24R. Thus, the fuel hose 49 includes a part extending along the rear frame 24R. The position of the clamp 24c of the rear frame 24R is not limited to this position, but may be located on the inclined portion 24a, for example. Alternatively, the clamp 24c may be disposed further rearward than the foremost part of the rear frame 24R.

As noted above, the storing box 50 is disposed between the left and right rear frames 24R and 24L. The rear frame 24R is arranged along the side surface of the middle part of the storing box 50 in the up-down direction. As illustrated in FIG. 4, the clamp 24c of the rear frame 24R is provided to a surface (left surface in this example) of the rear frame 24R located outwardly in the vehicle width direction. Accordingly, the portion of the fuel hose 49 extending along the rear frame 24R is located outside the rear frame 24R in the vehicle width direction. This structure increases the volume of the storing box 50.

As illustrated in FIG. 6, the clamp 51f of the storing box 50 is located closer to the rear end of the fuel hose 49 connected with the fuel discharge portion 41 (connector 49f) than an intermediate position P1 between the clamp 24c of the rear frame 24R and the rear end of the fuel hose 49. That is, the position of the fuel hose 49 held by the clamp 51f is located closer to the rear end of the fuel hose 49 than the intermediate position between the position held by the clamp 24c and the end of the fuel hose 49. According to this structure, movement of the fuel hose 49 in the vicinity of the fuel discharge portion 41 can be effectively prevented even when the clamp 24c is located far away from the fuel discharge portion 41.

As noted above, the fuel tank 40 includes the lower tank portion 40b. As illustrated in FIG. 6, the rear part of the lower tank portion 40b is located lower than the rear frames 24R and 24L in the side view. This structure can reduce the distance between the fuel discharge portion 41 and the clamp 51f in the up-down direction while securing a sufficient volume of the fuel tank 40. As illustrated in FIG. 5, the fuel discharge portion 41 is located in the front area of the upper surface of the fuel tank 40. This position of the fuel discharge portion 41 can facilitate the arrangement of the fuel hose 49, and prevent decrease in the volume of the fuel tank 40 in comparison with a structure which positions the fuel discharge portion 41 in the rear area of the upper surface of the fuel tank 40. More specifically, in the structure which disposes the fuel discharge portion 41 in the rear area of the upper surface of the fuel tank 40, an additional bending portion needs to be provided in the fuel hose 49, or a partial recess of the fuel tank 40 is required to prevent interference between the fuel hose 49 and the fuel tank 40. According to the structure in this embodiment which disposes the fuel discharge portion 41 in the front area of the upper surface of the fuel tank 40, the necessity for the additional bending of the fuel hose 49 or reduction of the volume of the fuel tank 40 is eliminated. Moreover, the fuel discharge portion 41 on the upper surface of the fuel tank 40 is offset toward the rear frame 24R from the center in the vehicle width direction. According to this structure, the distance between the fuel discharge portion 41 and the clamp 51f can be further reduced. As illustrated in FIG. 6, the lower surface of the front part of the fuel tank 40 (lower surface 40d of the front part of the lower tank portion 40b) is located lower than the lower surface of the rear part of the fuel tank 40 (lower surface 40e of the rear part of the lower tank portion 40b). Thus, fuel gathers in the front part of the fuel tank 40 when the amount of the fuel decreases. As noted above, the upper end of the fuel pump 47 is connected with the fuel discharge portion 41. Since the fuel discharge portion 41 is disposed in the front part of the upper surface of the fuel tank 40, the fuel pump 47 can be easily positioned in the front part of the inside of the fuel tank 40. Therefore, a lower end 47a of the fuel pump 47 (fuel suction part such as a strainer) can be easily positioned in the front part of the fuel tank 40 (i.e., the area where fuel gathers).

As illustrated in FIG. 6, a distance D1 between the clamp 51f and the horizontal plane where the fuel discharge portion 41 is disposed is shorter than a distance D2 between the clamp 51f and the rear frame 24R in the up-down direction. This structure decreases the distance between the fuel discharge portion 41 and the clamp 51f, and effectively reduces movement of the fuel hose 49 in the vicinity of the fuel discharge portion 41.

As discussed above, the seat 5 is disposed above the storing box 50 and the fuel tank 40. The seat 5 is supported by a foremost part 55 of the upper edge of the storing box 50 such that the storing box 50 is openable and closable (see FIG. 3). The lower surface of the seat 5 includes a supported portion which projects from the lower surface thereof toward the projections 51c and 51d of the rear flange 51a of the storing box 50. The seat 5 in its closed condition is supported by the projections 51 c and 51 d. As noted above, the clamp 51f is equipped on the projection 51c. That is, the fuel hose 49 is clamped by using the portion supporting the seat 5.

As illustrated in FIG.6, the outside surface of the storing box 50 has a rib 53a formed thereon and projected toward the rear. The rib 53a is positioned below the projection 51c to support the projection 51c. This structure increases the strength of the projection 51c. The fuel hose 49 passes downward through the clamp 51f, and extends downward on the lower side of the projection 51c. The enhanced strength of the projection 51c can prevent a load from being applied to the portion of the fuel hose 49 located below the projection 51 c, thereby preventing a load from being applied to the junction (connector 49f) between the fuel hose 49 and the fuel discharge portion 41.

As illustrated in FIGS. 4 and 7, the upper surface of the fuel tank 40 is covered by the cover 44. The cover 44 is so provided as to cover the fuel discharge portion 41, the junction between the fuel hose 49 and the fuel discharge portion 41, the portion of the fuel hose 49 between the fuel discharge portion 41 and the clamp 51f, and the clamp 51f. According to this structure, the fuel discharge portion 41 and the portion of the fuel hose 49 between the fuel discharge portion 41 and the clamp 51f are not exposed when the fuel tank 40 is viewed in the plan view. Thus, contact between the fingers of an operator and the fuel hose 49 can be avoided. The cover 44 includes an bulging portion 44a which extends along the fuel hose 49. An opening is formed in the rear part of the cover 44, and a feed oil port 45 formed in the rear part of the upper surface of the fuel tank 40 is exposed through the opening. A drain hose 48 is connected to the rear part of the cover 44. A saucer (not shown) is provided within the cover 44 to guide fuel leaked from the feed oil port 45 toward the drain hose 48. The drain hose 48 extends (on the left side) toward the front along the rear frame 24R.

The front part of the cover 44 is formed along the front wall 43a and the first corner wall 43b of the upper tank portion 40a of the fuel tank 40. As illustrated in FIG. 7, the lower edge of the front part of the cover 44 reaches the rear flange 51 a of the storing box 50. A front flange 44b is formed at the lower edge of the cover 44 and attached to the projection 51 c of the rear flange 51 a. According to this example, the projection 51 c has an attachment hole 51e (see FIG. 8) into which a projection (not illustrated) formed on the lower surface of the front flange 44b is inserted. This structure prevents position change of the front part of the cover 44 with respect to the clamp 51f, thereby avoiding a load produced by the shift of the cover 44 and applied to the fuel hose 49.

As discussed above, the fuel hose 49 is inserted through the inside of the annular member 51g included in the clamp 51f. The annular member 51g has an annular shape surrounding the entire circumference of the fuel hose 49. This structure securely restricts shift of the fuel hose 49 toward the rear. As illustrated in FIG. 9, the recess 51j opened to the rear is formed in the edge (rear edge in this example) of the projection 51 c of the rear flange 51a so that the annular member 51g can be accepted inside the recess 51j. This structure facilitates attachment of the fuel hose 49. More specifically, the fuel hose 49 can be clamped to the storing box 50 by a process that the fuel hose 49 is inserted into the annular member 51g,and then the annular member 51g is fitted into the recess 51j of the projection 51c. As illustrated in FIG. 8, the annular member 51g includes an upper annular portion 51h and a lower annular portion 51i between which the edge of the recess 51j of the projection 51 c is sandwiched. The annular member 51g in this example has a shape not perfect circular but elongated circular in the front-rear direction. This configuration reduce a movement of the fuel hose 49 by the clamp 51f without applying a load to the fuel hose 49 extending obliquely. The clamp provided on the storing box 50 is not limited to the clamp 51f having this structure. For example, the recess 51j formed in the projection 51c may have a size corresponding to the outside diameter of the fuel hose 49 to function as a clamp which clamps (holds) the fuel hose 49 directly to the storing box 50.

The storing box 50 is made of plastic material having relatively high rigidity. The annular member 51g is made of rubber or other materials having lower rigidity than that of the material of the storing box 50. This structure can avoid a load applied to the fuel hose 49. The fuel hose 49 includes a main tube 49c, and a protection tube 49g provided on the outside of the main tube 49c. The protection tube 49g is provided on the majority of the fuel hose 49, but not provided at the rear end of the fuel hose 49 such that the main tube 49c is exposed at the rear end. The annular member 51g surrounds the main tube 49c. The annular member 51g is made of relatively soft material and holds the main tube 49c. The clamp 24c of the rear frame 24R is made of metal and clamps the portion of the fuel hose 49 where the protection tube 49g is provided.

As illustrated in FIG. 10, the vehicle body cover 60 includes the right side cover 61 and the left side cover 61 covering the outsides of the rear frames 24R and 24L in the vehicle width direction, respectively. The vehicle body cover 60 further includes a front cover 62, a center cover 64, and an under-seat cover 65.

As illustrated in FIGS. 1 and 10, an upper part 62a of the front cover 62 covers the front side of the head pipe 21 of the vehicle body frame 20. The front cover 62 includes right and left side parts 62b projecting downward from the lower edges of the right part and the left part of the upper part 62a. The side parts 62b cover the right and left sides of the front part of the vehicle body.

As illustrated in FIGS. 1 and 10, a uppermost part 64a of the center cover 64 covers the rear side of the head pipe 21. The center cover 64 extends downward and rearward from the uppermost part 64a along the front frame 22 to cover the upper side of the front frame 22. The left and right edges of the center cover 64 are connected with the rear edges of the side parts 62b of the front cover 62. The center cover 64 in this example includes a rear part 64d in the lower part thereof. The rear part 64d extends downward and rearward from the lower part (rear part) of the center cover 64 along the front frame 22 and curves such that the front frame 22 surrounds the front frame 22. The center cover 64 further includes a front part 64c, the uppermost part 64d, and side walls 64d. The front part 64c is located on the front side (upper side) of the rear part 64d to cover the upper part of the front frame 22. The uppermost part 64a covers the rear part of the head pipe 21. The side walls 64b are connected with the rear edges of the side parts 62b of the front cover 62. According to this example, the uppermost part 64a, the front part 64c, and the side walls 64b are formed integrally with each other, but are separable from the rear part 64d. The separable structure of the center cover 64 is not limited to this structure but may be constructed such that the rear part 64d is formed integrally with other parts.

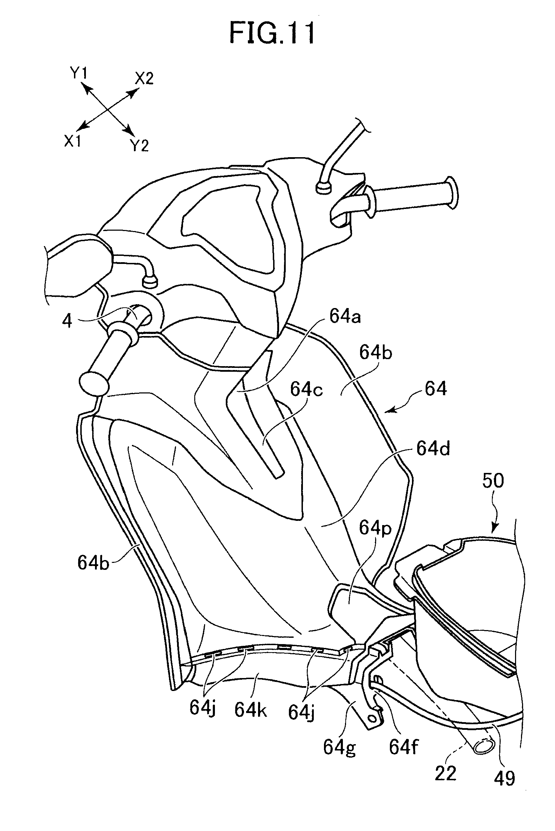

As illustrated in FIG. 10, the left side cover 61 and the right side cover 61 are located outside the rear frames 24R and 24L in the vehicle width direction. Each of the left side cover 61 and the right side cover 61 includes a rear part 61A covering the corresponding rear frame 24R or 24L, and a front part 61 B extending from the rear part 61A toward the front. Each of the front parts 61 B has a curved plate shape. The front parts 61 B on the right side and left side extends forward along lowermost parts (64k in FIG. 11) of the right part and left part of the rear part 64d while gradually curved toward the outside in the vehicle width direction. As illustrated in FIG. 1, the vehicle body cover 60 includes a lower cover 66. The lower cover 66 is disposed below the front part 61 B of the side cover 61 and covers the engine front part 32. FIG. 10 does not show the lower cover 66.

As illustrated in FIG. 10, the under-seat cover 65 is disposed below the seat 5 and surrounds the storing box 50 located below the seat 5. That is, the under-seat cover 65 covers the front side and lateral sides of the storing box 50. The lower edges of the right part and the left part of the under-seat cover 65 are connected with the upper edges of the side covers 61. The under-seat cover 65 includes a front part 65a located above the front frame 22 and attached to the rear part 64d of the center cover 64.

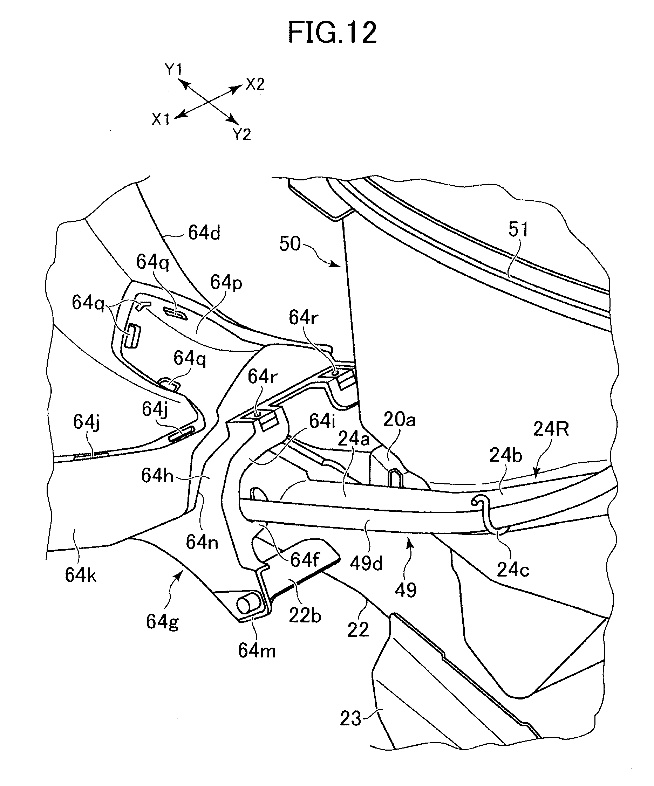

The supporting structure of the fuel hose 49 in the front area of the motorcycle 1 is now explained. FIG. 11 is a perspective view illustrating the supporting structure of the fuel hose 49 in the front area of the motorcycle 1. FIG. 12 is an enlarged view of the main part shown in FIG. 11.

As described above, the fuel hose 49 is attached to the rear frame 24R via the clamp 24c, and includes a part extending along the rear frame 24R. As illustrated in FIG. 2, the fuel hose 49 includes a portion between the part extending along the rear frame 24R and the fuel supply unit 34 (hereinafter referred to as a hose front portion 49d). As illustrated in FIG. 11, the vehicle body cover 60 includes a clamp 64f. The clamp 64f clamps (holds) the hose front portion 49d to a position away from the front frame 22 toward the outside in the vehicle width direction. According to this structure, the bend of the fuel hose 49 becomes smaller than the bend of the fuel hose 49 which is clamped to the front frame 22 and thereby extends along the front frame 22 and the inclined portion 24a of the rear frame 24R. In other words, the extension direction of the hose front portion 49d becomes closer to the linear direction in this example than the extension direction of the fuel hose 49 extending along the front frame 22 and the inclined portion 24a of the rear frame 24R. Moreover, the clamp 64f can more securely prevent position shift of the fuel hose 49 in the vicinity of the fuel supply unit 34 than a structure which does not have the clamp 64f. Accordingly, the stability of the connection between the fuel hose 49 and the fuel supply unit 34 increases. The clamp 64f in this example has an annular shape open upward. A position P2 indicated in FIGS. 2 through 4 corresponds to a portion of the fuel hose 49 held by the clamp 64f.

As noted above, each of the rear frames 24R and 24L includes the inclined portion 24a inclined toward the outside in the vehicle width direction, and the rear extending portion 24b bent with respect to the inclined portion 24a and extending from the rear end of the inclined portion 24a toward the rear. The clamp 24c of the rear frame 24R is provided on the rear extending portion 24b. According to this layout of the clamp 24c, the hose front portion 49d passes through a position farther away from the connection position between the front frame 22 and the rear frame 24R in the vehicle width direction than in a structure which disposes the clamp 24c on the inclined portion 24a. Accordingly, the bend of the hose front portion 49d can further decrease.

As explained above, the vehicle body cover 60 includes the center cover 64 and the side covers 61 connected with each other. The center cover 64 and the side covers 61 are components molded separately from each other. That is, the center cover 64 and the side cover 61 are separable from each other. The center cover 64 includes a portion invisible behind the side covers 61, and the clamp 64f is provided to the invisible portion of the center cover 64. More specifically, the center cover 64 includes a portion (projecting portion 64g described later) covered by the side cover 61, to which the clamp 64f is provided. According to this structure, the operator who removes the vehicle body cover 60 can visually recognize the clamp 64f on the center cover 64 by removing the side cover 61. Therefore, the operator can easily remove the fuel hose 49 from the clamp 64f when removing the vehicle body cover 60 from the vehicle body. Particularly, the clamp 64f in this example is disposed at the end (rear end in this example) of the center cover 64 toward the side cover 61. Thus, the operator can recognize the clamp 64f further easily after removal of the side cover 61. The clamp 64f is not necessarily required to be positioned at the end of the center cover 64. For example, the clamp 64f may be located away from the end of the center cover 64 toward the opposite side to the side cover 61 and is invisible behind the side cover 61.

According to this example, the center cover 64 is located forward from the side cover 61, while the clamp 64f is provided to the rear end of the center cover 64. More specifically, the rear part 64d of the center cover 64 is so configured as to cover the upper side of the front frame 22 as explained above. As illustrated in FIG. 12, the projecting portion 64g projecting toward the rear is provided at the rear end of the rear part 64d of the center cover 64. The clamp 64f is formed on the projecting portion 64g. The projecting portion 64g in this example includes a first wall 64h curved to surround the front frame 22, and a second wall 64i projects inwardly from the rear edge of the first wall 64h toward the front frame 22. The curvature provides the first wall 64h with a surface facing upward, a surface facing laterally, and a surface facing diagonally upward and laterally. The first wall 64h overlap with the front part 61 B of the side cover 61. The second wall 64i is so configured that the plane containing the second wall 64i crosses the front part 61 B of the side cover 61 and the front frame 22. A recess opened upward is formed in the inside edge of the second wall 64i to function as the clamp 64f. The hose front portion 49d passes through this recess and extends toward the front. According to the structure in this example, the recess formed in the inside edge of the second wall 64i as the clamp 64f can produce high strength against a force applied from above. Moreover, the curve of the first wall 64h can increase the strength of the first wall 64h more than the corresponding strength in a structure which does not have a similar curve.

As illustrated in FIG. 12, the front frame 22 includes a bracket 22b which extends outwardly from the front frame 22 in the vehicle width direction. The projecting portion 64g on which the clamp 64f is formed is attached to the bracket 22b. The clamp 64f is positioned higher than the bracket 22b. In other words, the clamp 64f is provided in the space above the bracket 22b. The position of the clamp 64f is slightly shifted toward the front from the bracket 22b. The first wall 64h includes an attachment portion 64m located at the lower end of the right part of the first wall 64h and attached to the bracket 22b. The clamp 64f is located further inwardly in the vehicle width direction than the attachment portion 64m. According to this structure, a force toward the inside in the vehicle width direction does not act on the fuel hose 49 held by the clamp 64f. The clamp 64f is offset toward the basal end (front edge 64n) of the first wall 64h from the attachment portion 64m. Thus, even when an external force is applied to the projecting portion 64g, the clamp 64f is not displaced by this force.

As discussed above, the front parts 61 B of the side covers 61 are connected with the lowermost parts 64k of the right portion and the left portion of the center cover 64. The projecting portion 64g is covered by the front part 61B of the side cover 61 (see FIG. 10). The side covers 61 can be removed from the vehicle body in a state where the center cover 64 remains attached to the vehicle body. In other words, in the step of removing the vehicle body cover 60, the side covers 61 can be removed prior to removal of the center cover 64, but the center cover 64 cannot be removed prior to removal of the side covers 61. The operator who desires to remove the vehicle body cover 60 is required to initially remove the side covers 61 from the vehicle body, then remove the fuel hose 49 from the clamp 64f, and finally remove the center cover 64 from the vehicle body. For attachment of the vehicle cover 60, these procedures are carried out in the reverse order. This structure can avoid a load applied to the fuel hose 49 during the step of removal of the vehicle body cover 60.

The projecting portion 64g is attached to the front frame 22 via the bracket 22b. The projecting portion 64g (more specifically, the attachment portion 64m) and the bracket 22b are covered by the front part 61 B of the side cover 61. A plurality of attachment portions 64j to which the upper edges of the front parts 61 B are attached are further provided on the lowermost parts 64k of the right portion and the left portion of the center cover 64 (see FIG. 11). The upper edges of the front parts 61 B are attached to the attachment portions 64j, and thereby the side covers 61 are supported by the center cover 64. The attachment portions 64j are positioned away from the lower edge of the center cover 64. The parts formed lower than the attachment portions 64j are covered by the front parts 61B of the side covers 61. According to the structure of the front parts 61 B of the side covers 61, and the structure of the attachment portions 64j and 64m of the center cover 64, the side covers 61 can be removed prior to removal of the center cover 64, but the center cover 64 cannot be removed prior to removal of the side covers 61 during the step of removing the vehicle body cover 60.

A center part 64p of the center cover 64 in the vehicle width direction is covered by the front part 65a of the under-seat cover 65 (see FIGS. 12 and 10). The clamp 64f of the center cover 64 is similarly covered by the front part 65a of the under-seat cover 65. An attachment portion 64q to which the front part 65a of the under-seat cover 65 is attached is provided on the center part 64p of the center cover 64. Similarly, an attachment portion 64r to which the front part 65a of the under-seat cover 65 is attached is provided on the projecting portion 64g. According to this attachment structure, the under-seat cover 65 can be removed from the vehicle body in a state where the center cover 64 remains attached to the vehicle body.

As noted above, the rear frame 24R includes the clamp 24c which clamps the portion of the fuel hose 49 extending along the rear frame 24R. As illustrated in FIG. 2, the clamp 64f of the center cover 64 (position P2 held by the clamp 64f) is located closer to the fuel supply unit 34 than the intermediate position between the clamp 24c and the fuel supply unit 34 is. This structure stabilizes the position of the portion of the fuel hose 49 in the vicinity of the fuel supply unit 34.

The clamp 64f of the center cover 64 is located rearward from the front end of the fuel hose 49. The clamp 64f is located at a height equal to or slightly higher than the connection position between the fuel supply unit 34 and the fuel hose 49 (front end of the fuel hose 49) in the side view. In this example, the position P2 held by the clamp 64f is located slightly higher than the front end of the fuel hose 49 as illustrated in FIG. 2. The clamp 24c of the rear frame 24R is located higher than the position P2. This arrangement reduces a bend of the fuel hose 49.

As can be seen from FIG. 2, the rear frame 24R extends straight in the upward direction toward the rear in the side view. The clamp 64f of the center cover 64 (i.e., the position P2 of the fuel hose 49) is located substantially at the same height as the position of the front end of the rear frame 24R. In other words, the clamp 64f is located laterally from the front end of the rear frame 24R. According to this arrangement, the portion of the fuel hose 49 between the clamp 64f and the clamp 24c extends along the inclined portion 24a of the rear frame 24R in the side view. Thus, this portion of the fuel hose 49 is difficult to interfere with other units disposed above and below this portion.

As noted above, the engine bracket 22a for suspending the engine 30 is provided on the front frame 22. As illustrated in FIG. 2, the fuel supply unit 34 is located further forward than the engine bracket 22a in the side view, and the clamp 64f is located further rearward than the engine bracket 22a in the side view. According to this arrangement, a sufficient space for carrying out attachment and detachment of the fuel hose 49 can be easily secured in comparison with a structure which disposes the clamp 64f at a position overlapping with the engine bracket 22a in the side view. Moreover, an unnecessary bend of the fuel hose 49 can be eliminated by adjustment of the position of the clamp 64f, which contributes to reduction of elongation of the fuel hose 49. The engine bracket 22a is located between the clamp 64f (position P2 of the fuel hose 49) and the fuel supply unit 34 in the side view. The fuel hose 49 is located outward from the engine bracket 22a in the vehicle width direction. The space between the clamp 64f and the fuel supply unit 34 is effectively used for the layout of the engine bracket 22a.

The engine bracket 22a extends diagonally downward and outward in the vehicle width direction from the outer surface of the front frame 22 (see FIG. 3). As illustrated in FIG. 2, the clamp 64f (position P2 of the fuel hose 49) and the connection position between the fuel supply unit 34 and the fuel hose 49 are positioned higher than the lower end of the engine bracket 22a. This arrangement easily avoids interference between the fuel hose 49 and the engine bracket 22a. As illustrated in FIG. 2, the clamp 64f (position P2 of the fuel hose 49) is located lower than the upper end of the engine bracket 22a and higher than the lower end of the engine bracket 22a. According to this layout, the clamp 64f can be disposed in a space produced above the engine bracket 22a. Moreover, as illustrated in FIG. 4, the clamp 64f in this example is located rearward from an outermost part (lower end) 22c of the engine bracket 22a in the plan view. This structure can avoid interference between the fuel hose 49 and the engine bracket 22s while preventing excessive distance of the fuel hose 49 from the front frame 22.

As explained above, the fuel hose 49 is connected with the side surface of the fuel supply unit 34. More specifically, as illustrated in FIG. 4, the fuel hose 49 includes the connector 49e at the front end thereof. The connector 49e has an L shape which extends from the side surface of the fuel supply unit 34 toward the outside in the vehicle width direction, and then bends toward the rear. This structure can further securely prevent interference between the engine bracket 22a and the fuel hose 49.

As illustrated in FIG. 4, the clamp 64f (position P2 of the fuel hose 49) is located inwardly the lateral side surfaces of the crank case 31 of the engine 30 in the vehicle width direction, and above the crank case 31. According to this arrangement of the clamp 64f, the fuel hose 49 extends above the crank case 31 and thereby avoids an external force applied to the fuel hose 49 from below by using the crank case 31. Moreover, this structure can reduce the distance between the fuel supply unit 34 and the portion (P2) of the fuel hose 49 held by the clamp 64f, thereby preventing large inclination or bending of the fuel hose 49 between the corresponding portion of the fuel hose 49 and the fuel supply unit 34.

As noted above, the fuel hose 49 includes a portion (hose rear portion 49a) extending from the fuel discharge portion 41 of the fuel tank 40 toward the rear frame 24R. The clamp 51f is disposed at the upper edge of the storing box 50. The clamp 51f is located laterally from the fuel tank 40 and clamps (holds) the hose rear portion 49a of the fuel hose 49 in a position spaced upward from the rear frame 24R. This structure can reduce position change of the hose rear portion 49a of the fuel hose 49 even when the fuel discharge portion 41 provided on the upper surface of the fuel tank 40 and the rear frame 24R have a long distance therebetween.

The fuel hose 49 includes a portion extending along the rear frame 24R, and a portion (hose front portion 49d) between the fuel supply unit 34 and the portion extending along the rear frame 24R. The clamp 64f of the center cover 64 clamps the hose front portion 49d of the fuel hose 49 at a position spaced from the front frame 22 toward the outside in the vehicle width direction. According to this structure, the bend of the fuel hose 49 can be made smaller without requiring a complicated structure than a structure which clamps the fuel hose 49 to the front frame 22 such that the fuel hose 49 can extend along the front frame 22 and the inclined portion 24a of the rear frame 24R.

The clamp 51f provided on the storing box 50 in the foregoing description corresponds to a first clamp in the appended claims, while the clamp 24c provided on the rear frame 24R corresponds to a second clamp in the appended claims.

The present teaching is not limited to the embodiment disclosed herein, but may be practiced otherwise in various manners within the scope of the appended claims.

For example, the engine 30 is not required to be disposed below the front frame 22, but may be located below the storing box 50 or in other positions.

A clamp may be provided on the front frame 22 in lieu of the clamp 64f on the vehicle body cover 60.

The recess formed in the rear flange 51 a of the storing box 50 may hold the fuel hose 49 with direct contact therewith to function as a clamp.

The clamp 51f of the storing box 50 may be positioned further outward than the rear frame 24R in the vehicle width direction.

The clamp 51f may be positioned lower than the upper edge of the storing box 50. For example, the clamp 51f may project toward the rear from a position lower than the rear flange 51 a.

## Claims

1. A straddle-type vehicle, comprising:
a seat (5);
a storing box (50) disposed below the seat (5);
a fuel tank (40) disposed below the seat (5) and positioned on the rear side of the storing box (50);
left and right rear frames (24R,24L) forming a rear part of a vehicle body frame and supporting the storing box (50) and the fuel tank (40), the rear frames (24R,24L) positioned lower than the upper edge of the storing box (50) and the upper surface of the fuel tank (40);
a fuel hose (49) connecting a fuel discharge portion (41) provided on the upper surface of the fuel tank (40) and a fuel supply unit (34) supplying fuel to an engine (30), the fuel hose (49) including a portion extending from the fuel discharge portion (41) toward one of the left and right rear frames (24R,24L);
a clamp (51f) clamping the portion of the fuel hose (49) and being located lower than the upper surface of the fuel tank (40) and located laterally from the fuel tank (40)
**characterized in that** the clamp (51f) is provided to the storing box (50), the clamp (51f) being spaced upward from the one rear frame toward which the portion of the fuel hose (49) extends.

2. A straddle-type vehicle according to claim 1, **characterized in that** the clamp (51f) has a shorter distance (D1) from the horizontal plane where the fuel discharge portion (41) is located than a distance (D2) in the up-down direction between the clamp (51f) and the one rear frame (24R).

3. A straddle-type vehicle according to claim 1 or 2, **characterized in that** the clamp (51f) is provided on a flange (51a) formed on the upper edge of the storing box (50).

4. A straddle-type vehicle according to claim 3, **characterized in that** the flange (51 a) of the storing box (50) is supporting the seat (5).

5. A straddle-type vehicle according to claim 3 or 4, **characterized in that** said flange of the storing box (50) is a rear flange (51a) extending rearward.

6. A straddle-type vehicle according to one of the claims 3 to 5, **characterized in that** the clamp (51f) includes a recess (51 j) formed on the flange (51a) and an annular member (51g) is accepted into the recess (51j), and the fuel hose (49) is inserted inside the annular member (51g).

7. A straddle-type vehicle according to one of the claims 1 to 6, **characterized in that** the clamp (51f) provided on the storing box (50) is defined as a first clamp,
the one rear frame (24R) includes a second clamp (24c) which clamps the fuel hose (49).

8. A straddle-type vehicle according to claim 7, **characterized in that** a surface of the one rear frame (24R) toward the outside in the vehicle width direction is provided with the second clamp (24c).

9. A straddle-type vehicle according to one of the claims 1 to 8, **characterized in that** the storing box (50) includes an upper portion (50a) positioned higher than the left and right rear frames (24R,24L), and a lower portion (50b) positioned lower than the left and right rear frames (24R,24L) and between the left and right rear frames (24R,24L).

10. A straddle-type vehicle according to one of the claims 1 to 9, **characterized in that** the clamp (51f) overlaps with the one rear frame (24R) as viewed in the plan view.

11. A straddle-type vehicle according to one of the claims 1 to 10, **characterized in that** the fuel tank (40) includes, in the front part thereof, a first corner wall (43b) and a second corner wall (43c) located on the opposed sides with respect to the center in the vehicle width direction;
the fuel hose (49) extends through a position on the front and lateral side of the first corner wall (43b).

12. A straddle-type vehicle according to claim 11, **characterized in that** a first point (i1) defined as a cross point of a line (L4) extending along the vehicle width direction and the first corner wall (43b) has a smaller distance (W1) from the center (L3) of the fuel tank (40) in the vehicle width direction than a second point (i2) defined as a cross point of the line (L4) extending along the vehicle width direction and the second corner wall (43c), and the clamp (51f) is located laterally from the first corner wall (43b).

13. A straddle-type vehicle according to one of the claims 1 to 12, comprising:
a front frame (22) extending diagonally downward and rearward from a head pipe (21) supporting a steering shaft and forming a front part of a vehicle body frame (20); the left and right rear frames (24R,24L) are forming a rear part of the vehicle body frame (20) and extending diagonally upward and rearward, wherein the left and right rear frames (24R,24L) each include a front end connected with a rear part of the front frame (22) and a front part extending diagonally rearward and outward in the vehicle width direction from the front end, and are located away from each other in the vehicle width direction;
the fuel tank (40) is supported by the left and right rear frames (24R,24L);
the fuel supply unit (34) is disposed below the front frame (22);
the fuel hose (49) includes a first portion that extends along one of the left and right rear frames (24R,24L) and a second portion (49d) that corresponds to a portion between the first portion and the fuel supply unit (34); and
a vehicle body cover (60) is provided with a further clamp (64f) clamping the second portion (49d) of the fuel hose (49) at a position located away from the front frame (22) toward the outside in the vehicle width direction.

## Patentansprüche

1. Fahrzeug vom Spreiz-Sitz-Typ mit:
einem Sitz (5);
einer Staubox (50), angeordnet unter dem Sitz (5);
einem Kraftstoff-Tank (40), angeordnet unter dem Sitz (5) und positioniert an der hinteren Seite der Staubox (50);
linke und rechte hintere Rahmen (24R, 24L), die einen hinteren Teil eines Fahrzeugkörper-Rahmens bilden und die Staubox (50) und dem Kraftstoff-Tank (40) lagern,
die hinteren Rahmen (24R, 24L) sind niedriger als eine obere Kante der Staubox (50) und der oberen Fläche des Kraftstoff-Tanks (40) positioniert;
eine Kraftstoff-Leitung (49), die einen Kraftstoff-Abgabeabschnitt (41), vorgesehen an der oberen Fläche des Kraftstoff-Tanks (40), und eine Kraftstoff-Zuführeinheit (34), die Kraftstoff zu einem Motor (30) zuführt, verbindet; die Kraftstoff-Leitung (49) beinhaltet einen Abschnitt, der sich von dem Kraftstoff-Abgabeabschnitt (41) zu einem von dem linken und rechten hinteren Rahmen (24R, 24L) erstreckt;
eine Klammer (51f) klemmt den Abschnitt der Kraftstoff-Leitung (49) und ist niedriger als die obere Fläche des Kraftstoff-Tanks (40) angeordnet und lateral von dem Kraftstoff-Tank (40) angeordnet, **dadurch gekennzeichnet, dass** die Klammer (51f) an der Staubox (50) vorgesehen ist, die Klammer (51f) nach oben, von dem einen hinteren Rahmen zu dem sich der Abschnitt der Kraftstoff-Leitung (49) erstreckt, beabstandet ist.

2. Ein Fahrzeug vom Spreiz-Sitz-Typ gemäß Anspruch 1, **dadurch gekennzeichnet, dass** die Klammer (51f) einen geringeren Abstand (D1) von einer horizontalen Ebene, in der der Kraftstoff-Abgabeabschnitt (41) angeordnet ist, als ein Abstand (D2) in der Oben-Unten-Richtung zwischen der Klammer (51f) und dem einen hinteren Rahmen (24R), hat.

3. Ein Fahrzeug vom Spreiz-Sitz-Typ gemäß Anspruch 1 oder 2 **dadurch gekennzeichnet, dass** die Klammer (51f) an einem Flansch (51a) vorgesehen ist, der an der oberen Kante der Staubox (50) ausgebildet ist.

4. Ein Fahrzeug vom Spreiz-Sitz-Typ gemäß Anspruch 3, **dadurch gekennzeichnet, dass** der Flansch (51 a) der Staubox 50 den Sitz (5) lagert.

5. Ein Fahrzeug vom Spreiz-Sitz-Typ gemäß Anspruch 3 oder 4, **dadurch gekennzeichnet, dass** dieser Flansch der Staubox (50) ein hinterer Flansch (51 a) ist, der sich nach hinten erstreckt.

6. Ein Fahrzeug vom Spreiz-Sitz-Typ gemäß einem der Ansprüche 3 bis 5, **dadurch gekennzeichnet, dass** die Klammer (51f) eine Ausnehmung (51j) beinhaltet, die an den Flansch (51 a) ausgebildet ist und ein ringförmiges Element (51g) ist in der Ausnehmung (51j) akzeptiert ist, und die Kraftstoff-Leitung (49) ist in die Innenseite des ringförmigen Element (51g) eingesetzt.

7. Ein Fahrzeug vom Spreiz-Sitz-Typ gemäß einem der Ansprüche 1 bis 6, **dadurch gekennzeichnet, dass** die Klammer (51f), vorgesehen an der Staubox (50) als eine erste Klammer definiert ist, der eine hintere Rahmen (24r) eine zweite Klammer (24c) beinhaltet, welche die Kraftstoff-Leitung (49) klemmt.

8. Ein Fahrzeug vom Spreiz-Sitz-Typ gemäß Anspruch 7, **dadurch gekennzeichnet, dass** eine Fläche des einen hinteren Rahmens (24R) zu der Außenseite in der Fahrzeug-Breitenrichtung mit der zweiten Klammer (24c) ausgebildet ist.

9. Ein Fahrzeug vom Spreiz-Sitz-Typ gemäß einem der Ansprüche 1 bis 8, **dadurch gekennzeichnet, dass** die Staubox (50) einen oberen Abschnitt (50A) beinhaltet, der höher als der linke und rechte hintere Rahmen (24R, 24L) positioniert ist, und ein unterer Abschnitt (50b) ist niedriger als der linke und rechte hintere Rahmen (24R, 24L) und zwischen dem linken und rechten hinteren Rahmen (24R, 24L) positioniert.

10. Ein Fahrzeug vom Spreiz-Sitz-Typ gemäß einem der Ansprüche 1 bis 9, **dadurch gekennzeichnet, dass** die Klammer (51f) mit dem einen hinteren Rahmen (24R) überlappt, wenn in einer Draufsicht betrachtet.

11. Ein Fahrzeug vom Spreiz-Sitz-Typ gemäß einem der Ansprüche 1 bis 10, **dadurch gekennzeichnet, dass** der Kraftstoff-Tank (40), in dem vorderen Teil desselben, eine erste Eckwand (43b) und eine zweite Eckwand (43c) beinhaltet, angeordnet an gegenüberliegenden Seiten mit Bezug auf die Mitte in der Fahrzeugbreitenrichtung; die Kraftstoff-Leitung (49) sich durch eine Position an der vorderen und lateralen Seite der ersten Eckwand (43b) erstreckt.

12. Ein Fahrzeug vom Spreiz-Sitz-Typ gemäß Anspruch 11, **dadurch gekennzeichnet, dass** ein erster Punkt (i1), definiert als ein Kreuzungspunkt einer Linie (L4), die sich entlang der Fahrzeug-Breitenrichtung erstreckt und der ersten Eckwand (43b), einen geringeren Abstand (W1) von der Mitte (L3) des Kraftstoff-Tanks (40) in der Fahrzeug-Breitenrichtung hat als ein zweiter Punkt (i2) definiert als ein Kreuzungspunkt der Linie (L4), die sich entlang der Fahrzeug-Breitenrichtung erstreckt und der zweiten Eckwand (43c), und die Klammer (51f) ist lateral von der ersten Eckwand (43b) angeordnet.

13. Ein Fahrzeug vom Spreiz-Sitz-Typ gemäß einem der Ansprüche 1 bis 12 mit:
einem vorderen Rahmen (22), der sich diagonal nach unten und hinten von einem Lenkkopf (21) erstreckt, der eine Lenkwelle lagert und einen vorderen Teil des Fahrzeugkörper-Rahmens (20) bildet;
die linken und rechten hintere Rahmen (24R, 24L) bilden einen hinteren Teil des Fahrzeugkörper-Rahmens (20) und erstreckt sich diagonal nach oben und hinten, wobei die linken und rechten hinteren Rahmen (24R, 24L) jeweils ein vorderes Ende, verbunden mit einem hinteren Teil des vorderen Rahmens (22), und einen vorderen Teil, der sich diagonal nach hinten und außen in der Fahrzeug-Breitenrichtung von dem vorderen Ende erstreckt, beinhalten, und voneinander beabstandet in der Fahrzeug-Breitenrichtung angeordnet sind;
der Kraftstoff-Tank (40) ist durch die linken und rechten hinteren Rahmen (24R, 24L) gelagert;
die Kraftstoff-Zuführeinheit (34) ist unter dem vorderen Rahmen (22) angeordnet;
die Kraftstoff-Leitung (49) beinhaltet einen ersten Abschnitt, der sich entlang einem von dem linken und rechten hinteren Rahmen (24R, 24L) erstreckt und einen zweiten Abschnitt (49d), der einem Abschnitt zwischen dem ersten Abschnitt und der Kraftstoff-Zuführeinheit (34) entspricht; und
eine Fahrzeugkörper-Abdeckung (60) ist mit einer weiteren Klammer (64) vorgesehen, welche den zweiten Abschnitt (49d) der Kraftstoff-Leitung (49) an einer Position, angeordnet entfernt von dem vorderen Rahmen (22) zu der Außenseite in der Fahrzeug-Breitenrichtung, klemmt.

## Revendications

1. Véhicule de type monté à califourchon, comprenant :
- un siège (5) ;
- un coffre de rangement (50) disposé au-dessous du siège (5) ;
- un réservoir de carburant (40) disposé au-dessous du siège (5) et positionné sur le côté arrière du coffre de rangement (50) ;
- des structures arrières gauche et droite (24R, 24L) formant une partie arrière d'un châssis de corps de véhicule et supportant le coffre de rangement (50) et le réservoir de carburant (40), les structures arrières (24R, 24L) étant positionnées plus bas que le bord supérieur du coffre de rangement (50) et la surface supérieure du réservoir de carburant (40) ;
- un tuyau de carburant (49) reliant une partie de décharge de carburant (41) disposée sur la surface supérieure du réservoir de carburant (40) et une unité d'alimentation en carburant (34) délivrant du carburant à un moteur (30), le tuyau de carburant (49) incluant une partie s'étendant depuis la partie de décharge de carburant (41) vers une des structures arrières gauche et droite (24R, 24L) ;
- une pince (51f) pinçant la partie du tuyau de carburant (49), située plus bas que la surface supérieure du réservoir de carburant (40) et latéralement par rapport au réservoir de carburant (40),
- **caractérisé en ce que** la pince (51f) est disposée au niveau du coffre de rangement (50), la pince (51f) étant espacée vers le haut de la structure arrière considérée vers laquelle la partie du tuyau de carburant (49) s'étend.

2. Véhicule de type monté à califourchon selon la revendication 1, **caractérisé en ce que** la pince (51f) est à une plus courte distance (D1) du plan horizontal où la partie de décharge de carburant (41) est située qu'une distance (D2) dans la direction haut-bas entre la pince (51f) et la structure arrière (24R) considérée.

3. Véhicule de type monté à califourchon selon les revendications 1 ou 2, **caractérisé en ce que** la pince (51f) est disposée sur un rebord (51a) formé sur le bord supérieur du coffre de rangement (50).

4. Véhicule de type monté à califourchon selon la revendication 3, **caractérisé en ce que** le rebord (51a) du coffre de rangement (50) supporte le siège (5).

5. Véhicule de type monté à califourchon selon les revendications 3 ou 4, **caractérisé en ce que** ledit rebord du coffre de rangement (50) est un rebord arrière (51a) s'étendant vers l'arrière.

6. Véhicule de type monté à califourchon selon l'une des revendications 3 à 5, **caractérisé en ce que** la pince (51f) comprend un creux (51j) conformé au rebord (51a), un élément annulaire (51g) est logé dans le creux (51j) et le tuyau de carburant (49) est inséré dans l'élément annulaire (51g).

7. Véhicule de type monté à califourchon selon l'une des revendications 1 à 6, **caractérisé en ce que** la pince (51f) disposé sur le coffre de rangement (50) est définie comme une première pince, la structure arrière (24R) considérée comprend une seconde pince (24c) qui pince le tuyau de carburant (49).

8. Véhicule de type monté à califourchon selon la revendication 7, **caractérisé en ce qu'**une surface de la structure arrière (24R) considérée vers l'extérieur dans la direction de la largeur du véhicule est pourvue de la seconde pince (24c).

9. Véhicule de type monté à califourchon selon l'une des revendications 1 à 8, **caractérisé en ce que** le coffre de rangement (50) comprend une partie supérieure (50a) positionnée plus haut que les structures arrières gauche et droite (24R, 24L) et une partie inférieure (50b) positionnée plus base que les structures arrières gauche et droite (24R, 24L) et entre les structures arrières gauche et droite (24R, 24L).

10. Véhicule de type monté à califourchon selon l'une des revendications 1 à 9, **caractérisé en ce que** la pince (51f) recouvre la structure arrière (24R) considérée vue dans une vue en plan.

11. Véhicule de type monté à califourchon selon l'une des revendications 1 à 10, **caractérisé en ce que** le réservoir de carburant (40) comprend, dans sa partie avant, une première paroi d'angle (43b) et une seconde paroi d'angle (43c) situées sur les côtés opposés par rapport au centre dans la direction de la largeur du véhicule ;
- le tuyau de carburant (49) passe par une position sur l'avant et le côté latéral de la première paroi d'angle (43b).

12. Véhicule de type monté à califourchon selon la revendication 11, **caractérisé en ce qu'**un premier point (i1) défini comme un point d'intersection d'une ligne (L4) s'étendant suivant la direction de la largeur du véhicule et la première paroi d'angle (43b) est à une plus courte distance (W1) du centre (L3) du réservoir de carburant (40) dans la direction de la largeur du véhicule qu'un second point (i2) défini comme un point d'intersection de la ligne (L4) s'étendant suivant la direction de la largeur du véhicule et la seconde paroi d'angle (43c) et la pince (51f) est située latéralement par rapport à la première paroi d'angle (43b).

13. Véhicule de type monté à califourchon selon l'une des revendications 1 à 12, comprenant :
- une structure avant (22) s'étendant diagonalement vers le bas et vers l'arrière depuis un tube de tête (21) supportant un arbre de direction et formant une partie avant d'un châssis de corps de véhicule (20) ;
- les structures arrières gauche et droite (24R, 24L) formant une partie arrière du châssis de corps de véhicule (20), s'étendant diagonalement vers l'arrière et vers l'extérieur dans la direction de la largeur du véhicule depuis l'extrémité avant et étant éloignées l'une de l'autre dans la direction de la largeur du véhicule ;
- le réservoir de carburant (40) supporté par les structures arrières gauche et droite (24R, 24L) ;
- l'unité d'alimentation en carburant (34) disposée au-dessous de la structure avant (22) ;
- le tuyau de carburant (49) incluant une première partie s'étendant le long d'une des structures arrières gauche et droite (24R, 24L) et une seconde partie (49d) correspondant à une partie entre la première partie et l'unité d'alimentation en carburant (34) ; et
- une couverture de corps de véhicule (60) pourvue d'une autre pince (64f) pinçant la seconde partie (49d) du tuyau de carburant (49) à une position éloignée de la structure avant (22) vers l'extérieur dans la direction de la largeur du véhicule.
